Europäisches Patentamt

European Patent Office

Office européen des brevets

(19)

(11) Veröffentlichungsnummer : **0 078 470**
**B1**

(12) **EUROPÄISCHE PATENTSCHRIFT**

(45) Veröffentlichungstag der Patentschrift :
02.01.86

(21) Anmeldenummer : **82109796.1**

(22) Anmeldetag : **23.10.82**

(51) Int. Cl.⁴ : **G 01 J  5/28, F 17 C  3/08**

(54) **Verfahren zum Herstellen eines optischen Strahlungsempfängers.**

(30) Priorität : **04.11.81 DE 3143658**

(43) Veröffentlichungstag der Anmeldung :
**11.05.83 Patentblatt 83/19**

(45) Bekanntmachung des Hinweises auf die Patenterteilung : **02.01.86 Patentblatt 86/01**

(84) Benannte Vertragsstaaten :
**DE FR GB NL**

(56) Entgegenhaltungen :
**DE-A- 2 247 845**
**US-A- 3 719 990**
**US-A- 3 851 173**
**US-A- 4 005 288**
**US-A- 4 059 764**
**US-A- 4 206 354**
**ELECTRONICS, 15. Juni 1964, Seiten 94-98, New
York, USA C.W. SKAGGS: "Photo-etching thin-film
circuits"**
**Lueger, Lexikon der Feinwerttechnik, Bd. 13, Deutsche Verlag-Anstalt GmbH, Stuttgart, 1968, S. 399-
400**

(73) Patentinhaber : **Licentia Patent-Verwaltungs-GmbH
Theodor-Stern-Kai 1
D-6000 Frankfurt/Main 70 (DE)**

(72) Erfinder : **Stahl, Konrad
Ravensburger Strasse 8
D-7900 Ulm (DE)**
Erfinder : **Theiss, Josef
Mecklenburgweg 4
D-7900 Ulm (DE)**
Erfinder : **Weber, Jochen
Am Illerkanal 6
D-7910 Neu-Ulm (DE)**

(74) Vertreter : **Langer, Karl-Heinz, Dipl.-Ing. et al
Licentia Patent-Verwaltungs-GmbH Theo-
dor-Stern-Kai 1
D-6000 Frankfurt/Main 70 (DE)**

**Beschreibung**

Die vorliegende Erfindung betrifft ein Verfahren zum Herstellen eines optischen Strahlungsempfängers mit mehreren Sensorelementen, die auf der Außenfläche des Bodens eines topfförmigen Innenteils aus Isoliermaterial angeordnet sind, das zusammen mit einem topfförmigen Außenteil ein topfförmiges Dewar-Gefäß bildet, und mit mehreren aus dem Dewar-Raum herausgeführten elektrischen Zuführungen für die Sensorelemente, wobei das Innenteil einen nach auswärts gerichteten Ringflansch aufweist und die Zuführungen aus als Schichten auf der Außenfläche des Innenteils ausgebildeten Leiterbahnen bestehen, deren außerhalb des Dewar-Raumes befindliche Abschnitte Kontaktierungsabschnitte bilden.

Strahlendetektoren mit einer Vielzahl von Sensor- oder Detektorelementen sind z. B. aus den US-Patentschriften US-A-40 05 288 oder US-A-38 51 173 bekannt. Dabei zeigt letztere Patentschrift einen Strahlungsempfänger der Gattung, auf die das erfindungsgemäße Herstellungsverfahren abgestellt ist. Die Strahlungsempfindlichkeit solcher Detektoren liegt beispielsweise im Bereich der Wärmestrahlen oder im Bereich der ultravioletten Strahlen. Solche Vielelementen-Detektoren werden zur bildlichen Darstellung verwendet. Es ist bekannt, daß solche Detektoren bei sehr niedrigen Temperaturen betrieben werden müssen, wenn sie eine hohe Empfindlichkeit besitzen sollen. So ist es bekannt, die Detektorelemente solcher Strahlungsempfänger in einem Vakuumraum unterzubringen, der gleichzeitig als Dewar-Raum ausgebildet ist. Eine übliche Bauform solcher Strahlungsempfänger besteht aus einem Dewar-Gefäß aus zwei topfförmigen Wandungsteilen, wobei die Detektorelemente auf der äußeren Bodenfläche des Innenwandungsteils angeordnet sind. In die Höhlung des Innenwandungsteils wird dann ein Verdampfungskühler oder ein ähnliches Kühlelement eingesetzt.

Eine Bilddarstellung läßt sich umso besser erzielen, je mehr voneinander getrennte Sensorelemente vorhanden sind. Das bedeutet aber, daß eine große Anzahl von elektrischen Zuleitungen zu diesen Sensorelementen und aus dem Dewar-Gefäß herausgeführt werden müssen. Aus der DE-A-22 47 845 ist es z. B. bekannt, die einzelnen Sensorelemente mit äußerst feinen Metalldrähten zu kontaktieren und diese im Verschmelzungsbereich der beiden Wandungsteile des Dewar-Gefäßes aus dem Gefäß herauszuführen, so daß sie von außen kontaktierbar sind.

Da solche Strahlungsempfänger nicht beliebig groß gemacht werden können, wird es mit zunehmender Anzahl von elektrischen Durchführungen schwieriger, eine einwandfreie hermetische Abdichtung des Dewar-Gefäßes zu erzielen, insbesondere dann, wenn solche Strahlungsempfänger auch noch hohen mechanischen und thermischen Belastungen ausgesetzt sind.

Der vorliegenden Erfindung liegt die Aufgabe zugrunde, das eingangs genannte Verfahren zum Herstellen eines Strahlungsempfängers so zu verbessern, daß bei kleinen Abmessungen eine hohe Anzahl von elektrischen Zuführungen ermöglicht wird und darüber hinaus eine zuverlässige und dauerhafte Abdichtung des Dewar-Gefäßes sichergestellt ist.

Zur Lösung dieser Aufgabe wird gemäß der Erfindung vorgeschlagen, daß der Rand des topfförmigen Außenteils mittels einer Glaslotnaht in der Weise mit der die Leiterbahnen bereits tragenden Oberfläche des Ringflansches verbunden wird, daß im Bereich der Glaslotnaht zunächst das Glaslot in vorgegebener Menge aufgebracht wird, dann eine Erhitzung zumindest des Lötbereichs bis zur Erweichung des Glaslots und bis zur Verbindung des Innenteils mit dem Außenteil vorgenommen wird und daß dann durch eine Temperung eine zumindest teilweise Rekristallisation des Glaslotes herbeigeführt wird.

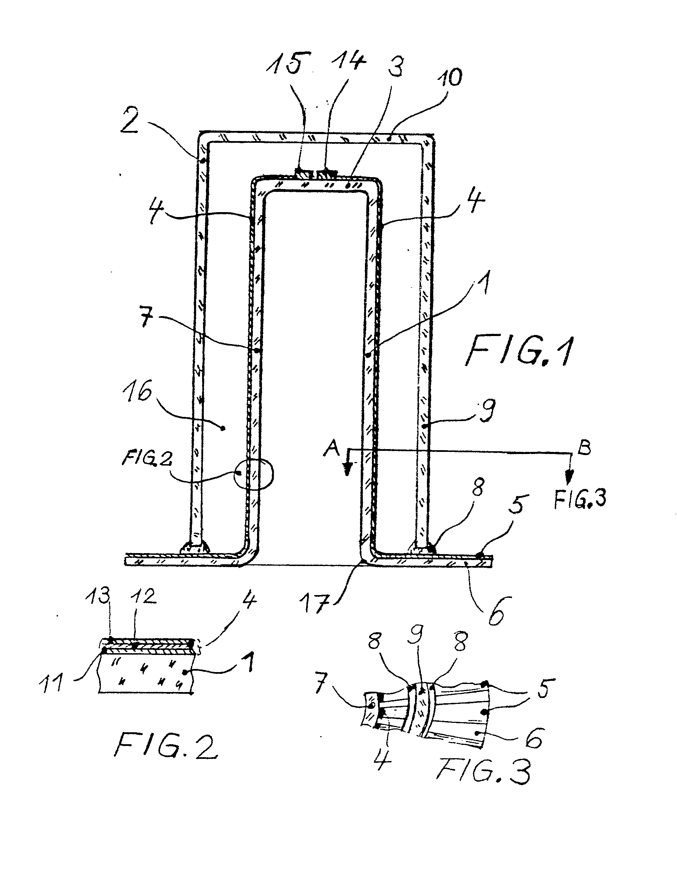

Das beschriebene Verfahren ermöglicht bei einfacher Herstellung eine sehr große Anzahl von Zuführungen und damit den Bau eines Strahlungsempfängers mit einer sehr großen Anzahl von Sensorelementen. Der so erreichte Aufbau erlaubt ohne Schwierigkeiten eine vakuumdichte Herausführung von mehr als zweihundert Zuführungen. Die beschriebene Glaslotabdichtung widersteht hohen Schockbelastungen und Temperaturschwankungen, ohne daß dadurch die Vakuumdichtigkeit leidet. Weiterbildungen der Erfindung sind in den Ansprüchen 2 bis 8 definiert. Anhand des in den Fig. 1 bis 3 dargestellten bevorzugten Ausführungsbeispiels wird ein erfindungsgemäß hergestellter Strahlungsempfänger nachfolgend näher erläutert.

Der Strahlungssempfänger besteht aus zwei topfförmigen Bauteilen 1 und 2, von denen das Innenteil 1 aus einem Isoliermaterial, wie Glas oder Keramik, besteht. Das Außenteil 2 besteht bei dem dargestellten Ausführungsbeispiel ebenfalls aus einem Glasteil. Jedes der beiden Teile besitzt einen Topfboden 3 bzw. 10. Der Topfboden 10 des äußeren Teiles muß zumindest in dem Bereich, der den Sensorelementen 14 und 15 gegenüberliegt, für die zu detektierenden Strahlung durchlässig sein. Die zylindrische Wandung 9 des äußeren Teiles 2 kann ggf. zumindest teilweise auch aus einem Metall bestehen. Im Bereich der vakuumdichten Glaslotnaht 8 jedoch ist auf eine genügende Isolierung zu achten.

Das den Topfboden 3 und die zylindrische Wandung 7 aufweisende Innenteil 1 besitzt an seinem offenen Ende einen im wesentlichen radial abstehenden Ringflansch 6, der bevorzugt über einen Abbiegeradius 17 mit dem zylindrischen Teil 7 verbunden ist. Von der Vielzahl der Sensorelemente sind der guten Übersicht wegen lediglich zwei Elemente 14 und 15 dargestellt. Um diese Elemente 14 und 15, die sich in dem abgeschlossenen Dewar-Raum 16 befinden, zu kontaktieren, sind nun schichtförmige Leiterbahnen 4 auf der Außenfläche des Innenteils 1 angebracht. Diese Leiterbahnen verlaufen parallel zur Längsachse des zylindrischen Teiles 1 und setzen sich auf der Oberfläche des ringförmigen Flansches 6 fort. Diese Leiterbahnen sind dort mit 5 bezeichnet, soweit sie sich außerhalb des Dewar-Raumes 16 befinden.

Die Verbindung des Außenteils 2 mit dem Innenteil 1 erfolgt in der Weise, daß der Rand des zylindrischen Teiles 9 des Außenteiles 1 mit derjenigen Oberfläche des Ringflansches 6, der die radial verlaufenden Leitungsbahnen 5 aufweist, mittels eines rekristallisierten Glaslotes 8 verlötet wird.

Das zur Verlötung benutzte Glaslot 8 ist ein solches, das zunächst in einem im wesentlichen amorphen Zustand eine Verlötung ermöglicht und dann durch eine längere Anwendung erhöhter Temperaturen (Temperung) zumindest teilweise in den kristallinen Zustand übergeht. Solche Glaslote werden im allgemeinen rekristallisierende Glaslote genannt. Es hat sich gezeigt, daß gerade die Verwendung eines solchen rekristallisierenden Glaslotes in einfacher Weise die erforderliche dichte Verbindung des Außenteils 1 mit dem Innenteil 2 gewährleistet und gleichzeitig eine einwandfreie vakuumdichte Haftung auf Metallen also den Leiterbahnen 5, ermöglicht. Zur Verbindung insbesondere von Gläsern und Metallen ist die Anwendung von Glaslotverbindungen mit anschließendem Tempern z. B. beschrieben im « Lexikon der Feinwerktechnik », Lueger, Deutsche Verlags-Anstalt GmbH., Stuttgart, 1968, Band 13, Seiten 399, 400.

Die Leiterbahnen bestehen bevorzugt aus mehreren aufeinanderliegenden Schichten unterschiedlicher Metalle, wobei gemäß einer bevorzugten Weiterbildung der Erfindung die direkt auf das Glas des Innenteils 1 aufzubringende Schicht 11 aus Chrom besteht.

In der Fig. 2 ist vergrößert ein ·Querschnitt dargestellt, aus dem eine bevorzugte Schichtenfolge zu ersehen ist. Die Leiterbahn 4 besteht dort aus drei aufeinanderliegenden Schichten 11, 12 und 13. Das Teil 1 besteht aus Glas. Auf diesem ist zunächst eine Chromschicht in einer Stärke von etwa 0,04 μm aufgetragen worden. Darüber befindet sich eine Kupferschicht 12 von einer Stärke von etwa 0,5 μm. Auf dieser Kupferschicht 12 ist schließlich eine Schicht 13 aus Edelmetall, insbesondere aus Gold, aufgetragen worden, die eine Stärke von etwa 0,5 bis 10 μm je nach Anforderung an den Widerstandswert besitzt. Durch entsprechende Wärmebehandlung wird erreicht, daß die einzelnen Schichten in den aneinandergrenzenden Bereichen Diffusionszonen bilden. Diese Mehrschicht-Leiterbahnen ziehen sich von der Kontaktierungsstelle mit den Sensorelementen bis zu dem Außenkontaktbereich 5 hin und lassen sich gut mit rekristallisierendem Glaslot verlöten.

In der Fig. 3 ist dargestellt, wie diese Leiterbahnen 5 sich fächerförmig zum Außenrand des Ringflansches 6 verbreitern und damit eine gute Kontaktierung ermöglichen. Auf der Außenwandung des zylindrischen Teiles 7 des Innenteils 1 verlaufen sie als gegeneinander isolierte schmale metallene Schichten 4.

Die Herstellung der Leiterbahnen auf der Außenfläche des Innenteils 1 erfolgt zweckmäßig in der Weise, daß die gewünschten Bereiche zunächst völlig mit den aufeinanderliegenden Schichten versehen werden und anschließend eine Strukturierung dieser großflächigen Schicht in der Weise erfolgt, daß getrennte Leiterbahnen in der gewünschten Form entstehen.

Ein Widerstandsabgleich der Leiterbahnen kann dadurch erfolgen, daß insbesondere am zylindrischen Teil 7 des Innenteils 1 die Leiterbahnen 4 in Abhängigkeit von dem elektrischen Widerstand des zugehörigen Sensorelements 14 bzw. 15 durch Querschnittsverringerung in ihrem Widerstandswert erhöht werden.

**Patentansprüche**

1. Verfahren zum Herstellen eines optischen Strahlungsempfängers mit mehreren Sensorelementen (14, 15), die auf der Außenfläche des Boden (3) eines topfförmigen Innenteils (1) aus Isoliermaterial angeordnet sind, das zusammen mit einem topfförmigen Außenteil (2) ein topfförmiges Dewar-Gefäß bildet, und mit mehreren aus dem Dewar-Raum (16) herausgeführten elektrischen Zuführungen für die Sensorelemente, wobei das Innenteil einen nach auswärts gerichteten Ringflansch (6) aufweist und die Zuführungen aus als Schichten auf der Außenfläche des Innenteils (1) ausgebildeten Leiterbahnen (4, 5) bestehen, deren außerhalb des Dewar-Raumes (16) befindliche Abschnitte (5) Kontaktierungsabschnitte bilden, dadurch gekennzeichnet, daß der Rand des topfförmigen Außenteils (2) mittels einer Glaslotnaht (8) in der Weise mit der die Leiterbahen (4, 5) bereits tragenden Oberfläche des Ringflansches (6) verbunden wird, daß im Bereich der Glasnotnaht (8) zunächst das Glaslot in vorgegebener Menge aufgebracht wird, dann eine Erhitzung zumindest des Lötbereichs bis zur Erweichung des Glaslots und bis zur Verbindung des Innenteils (1) mit dem Außenteil (2) vorgenommen wird und daß dann durch eine Temperung eine zumindest teilweise Rekristallisation des Glaslotes herbeigeführt wird.

2. Verfahren nach Anspruch 9, dadurch gekennzeichnet, daß das Glaslot in Form eines z. B. durch Pressen oder Sintern vorgeformten Glaslotringes in den Lötbereich eingebracht wird.

3. Verfahren nach Anspruch 1 oder 2, dadurch gekennzeichnet, daß die Leiterbahnen (4, 5) durch Bedeckung der Oberfläche des Innenteils (1) mit den Metallen der Leiterbahnen (4, 5) und nachfolgendes Entfernen der Schichten an den zur Isolation erforderlichen Stellen hergestellt werden.

4. Verfahren nach einem der Ansprüche 1 bis 3, dadurch gekennzeichnet, daß die Leiterbahnen (4, 5) durch nacheinander erfolgendes Aufbringen wenigstens zweier Metallschichten (11, 12, 13) hergestellt werden und daß in den aneinandergrenzenden Bereichen der Metallschichten (11, 12, 13) Diffusionszonen ausgebildet werden.

5. Verfahren nach Anspruch 4, dadurch gekennzeichnet, daß direkt auf das Innenteil (1) eine erste Schicht (11) aus Chrom aufgebracht wird.

6. Verfahren nach Anspruch 4 oder 5, dadurch gekennzeichnet, daß auf die erste Schicht (11) eine zweite metallene Schicht (12) aus Kupfer oder Titan aufgebracht wird.

7. Verfahren nach Anspruch 6, dadurch gekennzeichnet, daß eine dritte metallene Schicht (13) aus einem Edelmetall, insbesondere aus Gold, auf die zuvor aufgebrachten Schichten (11, 12) aufgebracht wird.

8. Verfahren nach einem der Ansprüche 4 bis 7, dadurch gekennzeichnet, daß die Metallschichten (11, 12, 13) durch Sputtern oder Aufdampfen aufgebracht werden.

## Claims

1. Method for the production of an optical radiation receiver with several sensor elements (14, 15), which are arranged on the outside surface of the base (3) of a pot-shaped inner part (1), which is of insulating material and together with a pot-shaped outer part (2) forms a pot-shaped Dewar vessel, and with several electrical feeds, led out of the Dewar space (16), for the sensor elements, wherein the inner part displays an outwardly directed annular flange (6) and the feeds consist of conductor tracks (4, 5), which are formed as layers on the outer surface of the inner part (1) and the portions (5) of which disposed outside the Dewar space (16) form contact portions, characterised thereby, that the rim of the pot-shaped outer part (2) is connected in such a manner by means of a glass solder seam (8) with the surface of the annular flange (6) already carrying the conductor tracks (4, 5) that initially the glass solder is applied in predetermined quantity in the region of the glass solder seam (8), then a heating of at least the soldering region is undertaken up to the softening of the glass solder and up to the connection of the inner part (1) with the outer part (2) and that then an at least partial recrystallation of the glass solder is brought about through an annealing.

2. Method according to claim 1, characterised thereby, that the glass solder is introduced into the soldering region in the shape of a glass solder ring preformed, for example by pressing or sintering.

3. Method according to claim 1 or 2, characterised thereby, that the conductor tracks (4, 5) are produced by covering the surface of the inner part (1) with the metals of the conductor tracks (4, 5) and subsequent removal of the layers at the places required for insulation.

4. Method according to one of the claims 1 to 3, characterised thereby, that the conductor tracks (4, 5) are produced by successive application of at least two metal layers (11, 12, 13) and that diffusion zones are formed in the adjoining regions of the metal layers (11, 12, 13).

5. Method according to claim 4, characterised thereby, that a first layers (11) of chrome is applied directly on the inner part (1).

6. Method according to claim 4 or 5, characterised thereby, that a second metallic layer (12) of copper or titanium is applied onto the first layer (11).

7. Method according to claim 6, characterised thereby, that a third metallic layer (13) of a precious metal, particularly of gold, is applied onto the previously applied layers (11, 12).

8. Method according to one of the claims 4 to 7, characterized thereby, that the metal layers (11, 12, 13) are applied by sputtering or evaporation.

## Revendications

1. Procédé de production d'un récepteur de rayonnement optique comportant plusieurs éléments détecteurs (14, 15) disposés sur la face extérieure du fond (3) d'une pièce intérieure (1) cylindrique, ouverte à une extrémité, réalisée dans une matière isolante et qui, en liaison avec une pièce extérieure (2) cylindrique ouverte à une extrémité, constitue un vase de Dewar cylindrique ouvert à une extrémité, ainsi que plusieurs connexions électriques sorties de l'enceinte de Dewar pour le raccordement des éléments détecteurs, la pièce intérieure présentant une bride annulaire dirigée vers l'extérieur et les connexions étant constituées par des rubans conducteurs (4, 5), réalisés sous forme de couches sur la face extérieure de la pièce intérieure (1) et dont les tronçons (5) situés à l'extérieur de l'enceinte de Dewar (16) servent à l'établissement de contacts, ledit procédé étant caractérisé en ce que le bord de la pièce extérieure (2) cylindrique ouverte à une extrémité et reliée comme suit à la surface de la bride annulaire (6) portant déjà les rubans conducteurs (4, 5) par un joint en verre de soudure (8) : une quantité prédéterminée de verre de soudure est d'abord déposée dans la zone du cordon (8) ; la zone de soudure au moins est ensuite chauffée jusqu'au ramollissement du verre de soudure et à la liaison entre les pièces intérieure (1) et extérieure (2) ; puis une recristalisation au moins partielle du verre de soudure est produite par attrempage.

2. Procédé selon revendication 1, caractérisé en ce que le verre de soudure est introduit dans la zone de soudure sous forme d'un anneau pressé ou fritté par exemple.

3. Procédé selon une des revendications 1 ou 2, caractérisé en ce que les rubans conducteurs (4, 5) sont produits en recouvrant la surface de la pièce intérieure (1) avec les métaux desdits rubans, puis en éliminant les couches aux endroits nécessaires pour l'isolation.

4. Procédé selon une quelconque des revendications 1 à 3, caractérisé en ce que les rubans conducteurs 4, 5 sont produits par le dépôt successif d'au moins deux couches métalliques (11, 12, 13) ; et des zones de diffusion sont réalisées dans les zones adjacentes des couches métalliques (11, 12, 13).

5. Procédé selon revendication 4, caractérisé par le dépôt d'une première couche (11) de chrome directement sur la pièce intérieure (1).

6. Procédé selon une des revendications 4 ou 5, caractérisé par le dépôt sur la première couche (11) d'une seconde couche métallique (12) de cuivre ou de titane.

7. Procédé selon revendication 6, caractérisé par le dépôt d'une troisième couche métallique (13) de métal précieux, et notamment d'or, sur les couches précédemment déposées (11, 12).

8. Procédé selon une quelconque des revendications 4 à 7, caractérisé par le dépôt des couches métalliques (11, 12, 13) par pulvérisation ou évaporation.

FIG.1

FIG.2

FIG.2

FIG.3

FIG.3